# EUROPEAN PATENT SPECIFICATION

(11) **EP 2 342 589 B1**
(45) Date of publication and mention of the grant of the patent: **09.01.2013**
(21) Application number: 09756695.4
(22) Date of filing: 29.10.2009
(51) Int. Cl.: G02B 1/10, C09D 5/24, C09K 3/14, C09K 3/16

(54) **CONDUCTIVE POLYMER-BASED CURABLE COATING COMPOSITION PROVIDING COATED ARTICLES WITH ENHANCED ANTISTATIC PROPERTIES**
LEITFÄHIGE POLYMERBASIERTE HÄRTENDE BESCHICHTUNGSZUSAMMENSETZUNG ZUR VERLEIHUNG VON ERHÖHTEN ANTISTATISCHEN EIGENSCHAFTEN FÜR BESCHICHTETE ARTIKEL
COMPOSITION DE REVÊTEMENT DURCISSABLE À BASE DE POLYMÈRE CONDUCTEUR FOURNISSANT DES ARTICLES REVÊTUS AVEC DES PROPRIÉTÉS ANTISTATIQUES AMÉLIORÉES

(30) Priority: 30.10.2008 US 109680 P
(43) Date of publication of application: 13.07.2011
(73) Proprietor: Essilor International (Compagnie Générale d'Optique), 94220 Charenton Le Pont (FR)
(72) Inventor: ZHENG, Haipeng, St Petersburg, Florida 33709 (US)
(74) Representative: Orsini, Fabienne
(86) International application number: PCT/EP2009/064319
(87) International publication number: WO 2010/049503

(56) References cited:
- WO-A1-00/74074
- FR-A1- 2 904 431
- US-A1- 2003 057 403

## Description

### BACKGROUND OF THE INVENTION

### 1. Field of the invention

The present invention relates to curable compositions for preparing transparent antistatic and optionally abrasion- and scratch-resistant coatings, articles exhibiting antistatic and optionally abrasion- and scratch-resistance properties coated therewith, in particular optical and ophthalmic lenses for eyeglasses, and a process to prepare such articles. These inventions are based on the use of new additives for enhancing antistatic and abrasion-resistance properties.

### 2. Description of related art

It is well known that optical articles, which are essentially composed of insulating materials, have a tendency to get charged with static electricity, especially when they are cleaned in dry conditions by rubbing their surface with a cloth or synthetic piece, for example a polyester piece (triboelectricity). The charges which are present at the surface of said optical articles create an electrostatic field capable of attracting and fixing, as long as the charge remains on optical articles, objects lying in the vicinity thereof (a few centimeters) that have a very little weight, generally small size particles such as dusts.

In order to decrease or suppress attraction of the particles, it is necessary to decrease the intensity of the electrostatic field, i.e. to decrease the number of static charges which are present at the surface of the article. This may be carried out by imparting mobility to the charges, for instance by introducing in the optical article a layer of a material inducing a high mobility of the charges. Materials inducing the highest mobility are conductive materials. Thus, a material having a high conductivity allows dissipating more rapidly charges.

It is known in the art that an optical article acquires antistatic properties owing to the incorporation at the surface, thereof, in the stack of functional coatings, of at least one electrically conductive layer, which is called an antistatic layer. The presence of such a layer in the stack imparts to the article antistatic properties, even if the antistatic coating is interleaved between two coatings or two substrates which are not antistatic.

By "antistatic", it is meant the property of not retaining and/or developing an appreciable electrostatic charge. An article is generally considered to have acceptable antistatic properties when it does not attract or fix dust or small particles after one of its surfaces has been rubbed with an appropriate cloth. It is capable of quickly dissipating accumulated electrostatic charges.

The ability of a glass to evacuate a static charge created by rubbing with a cloth or any other electrostatic charge generation process (charge applied by corona...) can be quantified by measuring the time required for said charge to be dissipated (charge decay time). Thus, antistatic glasses have a discharge time in the order of 100-200 milliseconds, while static glasses have a discharge time in the order of several tens seconds, sometimes even several minutes. A static glass having just been rubbed can thus attract surrounding dusts as long as it requires time to get discharged.

Only a limited number of materials are known in the art for preparing electrically conductive inorganic or organic layers having high optical transparency, i.e. a transmittance in the visible light of at least 90%. Known optically transparent antistatic coatings include vacuum-deposited metal or metal oxide films, for example films based on optionally doped (semi-)conductive metal oxides such as tin oxide doped with indium (ITO), tin oxide doped with antimony (ATO) or vanadium pentoxyde, spin-coated or self-assembled conductive polymer films.

ITO is the industry standard antistatic agent to provide optically transparent electrically conductive thin coatings, but the performance of ITO suffers when it is applied to plastics. These coatings are fragile and are readily damaged during bending or other stress inducing conditions. In addition, ITO layers need to be deposited by vacuum deposition in a controlled gas atmosphere.

Conductive polymers represent the most investigated alternative to ITO coatings. They are generally formed from a liquid coating composition, but still cannot match the optical and electrical performances of ITO and sometimes suffer from environmental stability problems in specific applications.

Poly(3,4-ethylenedioxythiophene)-poly(styrene sulfonate) (abbreviated as PEDT/PSS) is one of the most popular conductive polymers due to its excellent thermal stability and hydrolysis resistance. PEDT/PSS films can be synthesized from water dispersions. However, the conductivity of conventional PEDT/PSS films is typically insufficient for many uses.

A number of methods for enhancing the conductivity of waterborne conductive polymers consist in combining particular solvents or additives with the waterborne composition and then forming a film. It has been shown that the conductivity of polythiophene based films could be improved by the addition of polyols such as sorbitol or high-dielectric solvents such as dimethyl sulfoxide (DMSO), N,N-dimethylformamide (DMF) or N-methyl pyrrolidone (NMP), in the coating composition used to form the film. The conductivity enhancement strongly depends on the chemical structure of the additive.

More recently, high-conductivity, transparent PEDT/PSS films for use as electrodes in optoelectronics devices have been disclosed in Yang et al., Adv. Funct. Mater. 2005, 15, 203-208. The authors have found that the conductivity of PEDT/PSS films was increased by a factor of 400 by adding compounds with two or more polar groups, such as ethylene glycol, meso-erythritol (1,2,3,4-tetrahydroxybutane) or 2-nitroethanol into an aqueous solution of PEDT/PSS. No conductivity enhancement of the film is observed with mono-alcohols such as methanol, ethanol or heptanol as the additive. As for the mechanism for this observed conductivity enhancement, it is suggested that the additive induces a conformation change in the PEDT chains in the film, which results in an increase in the intrachain and interchain charge-carrier mobility, so that the conductivity is enhanced. Since the discovered additives are capable of establishing hydrogen bonds with the conductive polymer chains, the authors suggest that the driving force for the conformational change is the interaction between the additive and the polymer chains.

US 2003/006401 discloses transparent antistatic coatings based on conductive polymers of the polythiophenes type that exhibit an improved electrical conductivity (x20). The coatings are obtained from liquid polymer dispersions produced from a commercial aqueous composition by solvent exchange process. Said process replaces at least part (> 30 % by weight) of the water in a commercial aqueous polythiophene composition, such as a Baytron^{®} formulation (PEDT/PSS), with at least one other solvent chosen from NMP, DMSO, dimethylacetamide (DMAc), diols and triols such as ethylene glycol or glycerol, acetonitrile, dichloromethane, diethyl ether, lower alkoxy ethanes such as dimethoxyethane, DMF, methyl cyanoacetate, nitrobenzene etc., preferably NMP or DMAc.

US 2007/085061 describes an alternative treatment, for increasing the electrical conductivity of an already formed transparent thin film of PEDT/PSS. The conductivity of the film can be increased by exposure to solutions containing certain polar solvents such as ethylene glycol, formamide, 2,2,3,3-tetrafluoro-1-propanol, DMSO, pyridine, NMP, DMAc, isopropanol, methanol etc., or certain additives such as polyols (sorbitol, arabitol). It has been shown that it was not necessary for the solvent to remain in or on the film to achieve improved conductivity. After directly contacting the film with the solution, all or substantially all of the solvent can be removed by rinsing, heating, vacuum treatment, or other methods.

This alternative method does not affect the transparency of the film in the visible region and sometimes leads to a better conductivity enhancement as compared with the method consisting in pre-adding the solvent or additive to the coating composition.

It is still desirable to produce new conductive polymer-based antistatic compositions having improved mechanical properties, higher transparency, and lower haze values. The use of conductive polymers is often associated with optical transmission loss, which prevents conductive polymer-based antistatic compositions from being employed in some specific applications, especially in ophthalmic lens application.

### SUMMARY OF THE INVENTION

An object of the invention is to provide novel curable coating compositions capable of imparting antistatic properties to an optical article, without concurrently decreasing its optical transparency in the visible range.

Another object of the invention is to provide a cured coating capable of imparting antistatic properties to an optical article, despite the fact that it comprises low amounts of conductive polymers, typically less than 1 wt%, preferably 0.7 or less and better 0.6wt% or less of conductive polymer relative to the weight of the cured coating (dry coating).

A further object of the invention is to provide electrically conductive coatings providing antistatic properties, having low haze and excellent scratch and/or abrasion resistance at the same time.

The present inventors have found that the improvement of the conductivity and optionally abrasion resistance of a conductive-polymer-based coating could be achieved by adding a specific organic compound to its precursor coating composition.

The invention relates to a curable composition providing, upon curing, a transparent, antistatic coating, comprising:
a) at least one conductive polymer,
b) at least one binder,
c) at least one solvent, and
d) at least one compound of formula:

   R¹-O-[(CH₂-CHR')-O]ₙ-R² (A)
wherein R¹ and R² independently represent an alkyl group, R' is H and n is an integer ranging from 2 to 225.

One embodiment of the invention is directed to a curable composition which provides, upon curing, an abrasion-resistant, transparent, antistatic coating, comprising at least one epoxysilane binder of formula:

R_{n'}YₘSi(X)_{4'}-ₙₘ (I)

or a hydrolyzate thereof, in which the R groups are identical or different and represent monovalent organic groups linked to the silicon atom through a carbon atom, the Y groups are identical or different and represent monovalent organic groups linked to the silicon atom through a carbon atom and containing at least one epoxy function, the X groups are identical or different and represent hydrolyzable groups or hydrogen atoms, m and n' are integers such that m is equal to 1 or 2 and n' + m = 1 or 2.

The invention also relates to an optical article comprising a substrate, wherein the substrate is at least partially coated with a transparent antistatic coating formed by depositing onto the substrate and curing the above described curable composition.

The invention further relates to a process for preparing said transparent antistatic optical article by a wet method.

The antistatic coatings of the present invention can be used in different stacks and still provide antistatic properties to an optical article, even if other functional coatings, especially antireflective coatings made of dielectric materials, are deposited over said coatings.

Other objects, features and advantages of the present invention will become apparent from the following detailed description. It should be understood, however, that the detailed description and the specific examples, while indicating specific embodiments of the invention, are given by way of illustration only, since various changes and modifications within the scope of the invention will become apparent to those skilled in the art from this detailed description.

### BRIEF DESCRIPTION OF THE DRAWINGS

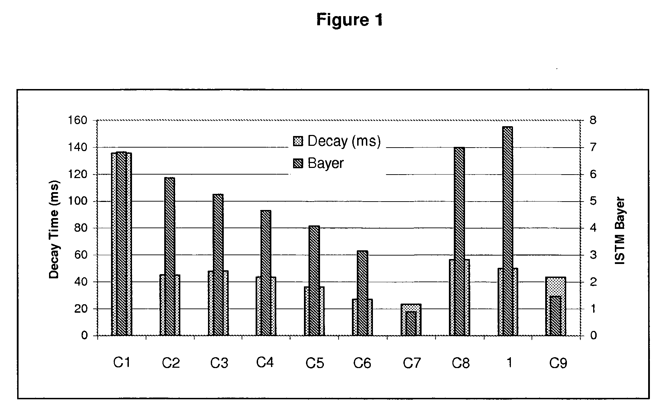

The foregoing and other objects, features and advantages of the present invention will become readily apparent to those skilled in the art from a reading of the detailed description hereafter when considered in conjunction with the accompanying drawings, wherein figure 1 reveals the effect of adding various organic compounds in a conductive polymer-based curable composition on the antistatic and abrasion resistance properties of the coating resulting from curing of said composition.

### DETAILED DESCRIPTION OF THE INVENTION AND PREFERRED EMBODIMENTS

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

When an optical article comprises one or more surface coatings, the phrase "to deposit a coating or layer onto the optical article" means that a coating or layer is deposited onto the outermost coating of the optical article, i.e. the coating which is the closest to the air.

A coating that is "on" a side of a lens is defined as a coating that (a) is positioned over that side, (b) need not be in contact with that side, i.e., one or more intervening coatings may be disposed between that side and the coating in question, and (c) need not cover that side completely.

The optical article prepared according to the present invention is a transparent optical article, preferably a lens or lens blank, and more preferably an ophthalmic lens or lens blank. The optical article may be coated on its convex main side (front side), concave main side (back side), or both sides with the antistatic coating according to the invention.

Herein, the term "lens" means an organic or inorganic glass lens, comprising a lens substrate which may be coated with one or more coatings of various natures.

The lens substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39^{®} from PPG Industries), thermosetting polyurethanes, polythiourethanes, polyepoxides, polyepisulfides, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC) and diethylene glycol bis(allylcarbonate) polymers, in particular substrates made of polycarbonate.

The optical article comprising a substrate used herein may also be a carrier onto which the antistatic coating is stored. It can be transferred later from the carrier onto the substrate of e.g. an optical lens. Said carrier may optionally bear at least one functional coating. Obviously, the coatings are applied on the surface of the carrier in the reverse order with regard to the desired order of the coating stack on the lens substrate.

The surface of the article onto which the transparent antistatic coating will be applied may optionally be subjected to a pre-treatment step intended to improve adhesion, for example a high-frequency discharge plasma treatment, a glow discharge plasma treatment, a corona treatment, an electron beam treatment, an ion beam treatment, an acid or base treatment.

The antistatic coating according to the invention may be deposited onto a naked substrate or onto the outermost coating layer of the substrate if the substrate is coated with at least one surface coating. Said at least one surface coating may be, without limitation, an impact-resistant coating (impact resistant primer), an abrasion and/or scratch resistant coating, a polarized coating, a photochromic coating or a dyed coating.

The impact-resistant coating which may be used in the present invention can be any coating typically used for improving impact resistance of a finished optical article. This coating generally enhances adhesion of the abrasion and/or scratch-resistant coating on the substrate of the finished optical article. By definition, an impact-resistant primer coating is a coating which improves the impact resistance of the finished optical article as compared with the same optical article but without the impact-resistant primer coating.

Typical impact-resistance primer coatings are (meth)acrylic based coatings and polyurethane based coatings, in particular coatings made from a latex composition such as a poly(meth)acrylic latex, a polyurethane latex or a polyester latex.

The abrasion- and/or scratch-resistant coating which may be used in the present invention can be any coating typically used for improving abrasion- and/or scratch-resistance of a finished optical article as compared to a same optical article but without the abrasion- and/or scratch-resistant coating.

Preferred abrasion- and/or scratch-resistant coatings are (meth)acrylate based coatings and silicon-containing coatings. The latter are more preferred and are disclosed, for example, in French patent application FR 2702486.

The inventive curable coating composition applied onto the substrate provides, upon curing, a functional transparent coating having antistatic properties and, optionally, abrasion and/or scratch resistance. It will be sometimes referred to in this patent application as the "antistatic composition".

The antistatic coating composition may be a solution or dispersion, both terms being merged in the present patent application. These terms refer to a mixture of components which generally is uniform at the macroscopic scale (visually) and are not related to a particular solubility state or particle size of said components.

Said curable composition comprises at least one conductive polymer, at least one binder, at least one solvent, and at least one compound of formula (A).

As will be said later, most of the polymers are available in solution or dispersion in solvent(s).

In the context of this patent application, the expression "conductive polymer" is intended to mean the conductive molecular entity (without solvent).

Among conductive polymers, those leading to thin transparent layers are preferred. As examples of transparent, organic, conductive polymers may be cited polyanilines, such as those disclosed in US Patents 5,716,550 and 5,093,439, polypyrroles, such as those disclosed in US Patents 5,665,498 and 5,674,654, polythiophenes, such as those disclosed in US Patents 5,575,898, 5,403,467 and 5,300,575, poly(thienothiophenes) such as those disclosed in US 2007/085061, polyethylene-imines, polyselenophenes, compounds based on allylamine such as poly(allylamine), polyazines, polyvinylphenylene, polyacetylenes, poly(phenylene sufides), copolymers thereof, derivatives of those polymers and mixtures thereof. They may be employed as mixtures. Other examples of conductive polymers can be found in "Conjugated Polymeric Materials: Opportunities in Electronics, Optoelectronics, and Molecular Enginering", J. L. Bredas and B. Silbey, Eds., Kluwer, Dordrecht, 1991.

Those conductive polymers are generally employed under a polycationic form (polyaniline cation, polypyrrole cation, polythiophene cation, poly(allylamine) cation...), generally in combination with one or more polyanions. The polyionic compounds may be compounds including a charge in their main chain or compounds including ionizable side groups.

Polyanions, either conjugated or not, represent any type of polymer fitted with ionizable groups, typically within the repeat unit, that are capable of supporting negative charges when ionized. They may be chosen, without limitation, from polymeric carboxylic or sulfonic acids anions (polyacids), and mixtures thereof. For example, polystyrene sulfonate, polyaniline sulfonate, polyvinyl sulfonate, polyacrylate, polymethacrylate, polymaleate, poly(thiophene-3-acetate), fluoropolymeric acids anions such as perfluorosulfonic acid polymer anions (e.g. Nafion^{®}) as well as anions of copolymers obtained by copolymerizing at least one acidic monomer such as acrylic, methacrylic, maleic, styrene sulfonic, or vinyl sulfonic acid with at least another monomer, either acidic or not, may be cited. Among said non acidic monomers, styrene or acrylic esters may be cited. Other examples of polyanions can be found in "Coulombic interactions in Macromolecular Systems" ACS Symposium Series No.302, A. Eisenberg and F. Bailey Eds., 1986. The preferred polyanion is polystyrene sulfonate.

The number average molecular weight of polyanion precursor polyacids generally ranges from 1000 to 2.10⁶ g/mol, preferably from 2000 to 500000.

Polyacids can be prepared by known methods or are commercially available, optionally under a metallic salt form.

Conductive polymers can be substituted with very diverse functional groups, notably hydrophilic groups, preferably ionic or ionizables, such as the following groups: COOH, SO₃H, NH₂, ammonium, phosphate, sulfate, imine, hydrazino, OH, SH or salts thereof. Presence of these functional groups make easier the preparation of an aqueous antistatic coating composition, since they make conductive polymers more compatible with water and thus more soluble in the composition. This may improve the quality of the deposit.

Preferred conductive polymers are polypyrroles derivatives, in particular the 3,4-dialkoxy substituted polypyrroles derivatives, and polythiophenes derivatives, in particular the 3,4-dialkoxy substituted polythiophenes derivatives such as polydioxythiophenes disclosed in US 2003/006401 (e.g. poly(3,4-alkylenedioxythiophenes), preferably poly(3,4-ethylenedioxythiophene)), poly(3-alkylthiophenes), poly(3,4-dialkylthiophenes) or poly(thieno[3,4-b]thiophenes), and mixtures thereof. They are preferably used under their polystyrene sulfonate (PSS) form, e.g. polypyrroles-PSS or polythiophenes-PSS.

Specific examples of preferred conductive polymers are poly(3,4-ethylenedioxythiophene)-poly(styrene sulfonate) and poly(3,4-ethylenedioxypyrrole)-poly(styrene sulfonate).

Conductive polymers are commercially available or may be prepared according to known methods. Polypyrroles polystyrene sulfonate, for example, can be synthesized by oxidation polymerization of pyrroles in aqueous medium, in the presence of poly(styrene sulfonic) acid and ammonium persulfate as an oxidant. Procedures for converting the 3,4-ethylenedioxythiophene monomer to its polymeric form have been disclosed by the Bayer Corporation.

Preferred conductive polymers are water soluble or water dispersible, or soluble or dispersible in an alcohol or a mixture water/alcohol, so as to be able to be applied through a composition onto the surface of an optical article.

Conductive polymers are generally introduced in the antistatic coating composition under the form of a dispersion (or solution) of at least one conductive polymer in an aqueous or organic solvent, or a mixture of these solvents, preferably water, more preferably deionized water.

As examples of commercially available antistatic coating compositions which are conductive polymer dispersions may be cited Baytron^{®} P or Baytron^{®} PH 500 or Baytron P HC V 4, based on polythiophene, developed by Bayer and commercialized by H. C. Starck. They are aqueous dispersions of the polymer complex poly(3,4-ethylenedioxythiophene)-poly(styrene sulfonate), abbreviated as PEDT/PSS, which contain 1.2 to 1.3 % by weight of conductive polymer-PSS. Said composition leads to antistatic films which are inexpensive to produce, have a very good temperature resistance and are compatible with many material systems.

The additive responsible for the improvement of the antistatic properties of the film obtained from the inventive coating composition will now be described.

Said additive is a compound of formula:

R'-O-[CH₂-CHR'-O]ₙ-R² (A)

wherein R¹ and R² independently represent an alkyl group, R' is H and n is an integer ranging from 2 to 225.

Compounds of formula (A) are (α,ω)-dialkyl oligomers or polymers of ethyleneglycol Depending on n, R¹ and R², such compounds may be liquids or solids.

Preferably, R¹ and R² independently represent a C₁-C₂₀ alkyl group, more preferably a C₁-C₁₀ alkyl group, even better a C₁-C₅ alkyl group. Most preferred R¹ (or R²) groups are methyl, ethyl, n-propyl and n-butyl. Generally, R¹ and R² represent the same group.

Compounds of formula (A) are poly(ethyleneglycol) dialkyl ethers (R' = H) preferably poly(ethyleneglycol) dimethyl or diethyl ethers. The particularly preferred compounds (A) are those wherein R' = H, in particular poly(ethyleneglycol) dimethyl ethers. As used herein, the term "poly(ethyleneglycol) dialkyl ethers" refers to di-alkyl terminated oligomers or polymers of ethyleneglycol.

n is preferably lower than or equal to 110, more preferably lower than or equal to 50, even better lower than or equal to 20. Preferred examples of compounds of formula (A) are those wherein n = 2, 3, 4, 5, 6, 7, 8, 9 or 10.

As implied by the numerical range of integer n, compounds of formula (A) are compounds of low molecular weight, preferably lower than or equal to 10,000 g/mol, more preferably lower than or equal to 5000 g/mol, most preferably lower than or equal to 2000 g/mol, even better lower than or equal to 400 g/mol. When the inventive antistatic coating composition comprises a mixture of compounds of formula (A), the number average molecular weight of said mixture preferably satisfies the same requirements. If the molecular weight is too high, e.g. above 10,000 g/mol, this could imply a decrease of abrasion resistance of the cured coating.

Specific examples of compounds (A) in which R¹ = R² = methyl or ethyl are diethyleneglycol dimethylether (n = 2, M = 134 g/mol), diethyleneglycol diethylether (n = 2, M = 162 g/mol), triethyleneglycol dimethylether (n = 3, M = 178 g/mol), tetraethyleneglycol dimethylether (n = 4, M = 222 g/mol), and pentaethyleneglycol dimethylether (n = 5, M = 266 g/mol). Polyethyleneglycol dialkylethers having molecular weights around 400 or 2,000 may also be useful.

Such compounds can be readily synthesized according to known methods or are commercially available from Fluka^{®} or Sigma-Aldrich^{®} as pure compounds or as mixtures compounds of defined average molecular weight. By way of example, poly(ethylene glycol) dimethyl ethers are commercially available as mixtures of compounds of formula CH₃O(CH₂CH₂O)ₙCH₃ having an average molecular weight of e.g. 150, 250, 400, 500, 1,000, 2,000 etc.

The compounds of formula (A) is used at low concentrations and can represent from 0.5 to 20 % by weight, relative to the weight of the coating composition, preferably from 0.5 to 15 %, more preferably from 1 to 12%, even better from 1 to 10 %, and optimally 1 to 5%.

Contrary to the antistatic compositions of the prior art cited hereinbefore, which recommend the use of mono-alcohols (2-nitro-ethanol) or polyols such as diols (ethylene glycol), triols (glycerol) and even higher alcohols such as meso-erythritol or sorbitol to increase the electrical conductivity of the resulting coating, the present invention uses compounds of formula (A) to increase its antistatic properties, wherein said compound are devoid of hydroxyl groups. As will be seen in the experimental part, presence of hydroxyl groups has been surprisingly found to be detrimental to the antistatic properties.

Preferably, the antistatic coating composition comprises less than 5 % by weight of polyols, defined as compounds having at least two hydroxyl groups per molecule, in particular diols, preferably less than 2 % by weight of polyols or diols, even better less than 1 % by weight. Ideally, the antistatic coating composition comprises no polyols, in particular no diols.

The antistatic coating composition comprises at least one binder. The binder can be any film-forming material. "Binder" is defined as a compound capable of improving adhesion of the antistatic coating to the underlying layer and/or the upper layer, and/or integrity of the antistatic coating. The binder may allow strengthening abrasion and/or scratch resistance of the final optical article, depending on the binder nature.

The binder has to be compatible with the conductive polymer, i.e. not be detrimental to its antistatic properties, form a stable solution by avoiding precipitation of said polymer or aggregation thereof in more or less big particles, which would generate optical flaws.

The choice of the binder is generally determined by the employed system of solvents in the coating composition, for it has to be soluble or dispersible in said system of solvents.

The binder preferably is a polymer material, generally organic. It may be formed from a thermoplastic or thermosetting material, optionally cross-linkable through polycondensation, polyaddition or hydrolysis. Mixtures of binders from different categories may also be employed.

Binders are preferentially soluble or dispersible in water or in an aqueous composition such as a hydro-alcoholic composition. Among water soluble or dispersible binders may be cited homopolymers or copolymers of the following monomers: styrene, vinylidene chloride, vinyl chloride, alkyl acrylates, alkyl methacrylates, (meth)acrylamides, polyester homopolymers or copolymers, poly(urethane-acrylate), poly(ester-urethane), polyether, vinyl polyacetate, polyepoxyde, polybutadiene, polyacrylonitrile, polyamide, melamine, polyurethane, polyvinylic alcohol, copolymers thereof, and mixtures thereof. Among poly(meth)acrylate binders may be cited poly(methyl methacrylate).

The binder may be a water soluble polymer, or may be used under a latex form or a mixture of latexes.

As it is well known, latexes are stable dispersions of particles of at least one polymer in an aqueous medium. Preferred latexes are polyurethane latexes optionally comprising polyester moieties, poly(meth)acrylic latexes, polyester latexes and mixtures thereof. The latex may comprise hydrophilic functional groups such as sulfonic or carboxylic acid groups. Optionally, the latex is of the core-shell type.

Polyurethane-polyester latexes are commercially available from ZENECA RESINS under the trade name Neorez^{®} (e.g., Neorez^{®} R-962, Neorez^{®} R-972, Neorez^{®} R-986, Neorez^{®} R-9603) or BAXENDEN CHEMICALS, a subsidiary of WITCO Corporation, under the trade name Witcobond^{®} (e.g., Witcobond^{®} 232, Witcobond^{®} 234, Witcobond^{®} 240, Witcobond^{®} 242).

Another binder category which may be used in the antistatic coating composition comprises binders based on functionalized silane, siloxane or silicate (alkali metal salt of a Si-OH compound), or hydrolyzates thereof. They are generally substituted with one or more functional organic groups and form silica organosols. As binders, they may also act as adhesion promoters toward organic or mineral glass substrates. These binders may also act as cross-linking agents toward conductive polymers used under the form of polystyrene sulfonate salts and the like.

As silicon containing binders may be cited silanes or siloxanes bearing an amine group such as amino alkoxysilanes, hydroxy silanes, alkoxysilanes, preferably methoxy or ethoxy silanes, for example epoxy alkoxysilanes, ureidoalkyl alkoxysilanes, dialkyl dialkoxysilanes (for example dimethyl diethoxysilane), vinylsilanes, allylsilanes, (meth)acrylic silanes, carboxylic silanes, polyvinylic alcohols bearing silane groups, tetraethoxysilane, and mixtures thereof.

After having been subjected to hydrolysis, the above cited organofunctional binders generate interpenetrated networks by forming silanol groups, which are capable of establishing bonds with the upper layer and/or the underlying layer.

The preferred binder comprises at least one compound of formula:

R_{n'}YₘSi(X)_{4-n'-m} (I)

or a hydrolyzate thereof, in which the R groups are identical or different and represent monovalent organic groups linked to the silicon atom through a carbon atom, the Y groups are identical or different and represent monovalent organic groups linked to the silicon atom through a carbon atom and containing at least one epoxy function, the X groups are identical or different and represent hydrolyzable groups or hydrogen atoms, m and n' are integers such that m is equal to 1 or 2 and n' + m = 1 or 2.

The X groups may independently and without limitation represent H, alkoxy groups -OR¹, wherein R¹ preferably represents a linear or branched alkyl or alkoxyalkyl group, preferably a C₁-C₄ alkyl group, acyloxy groups -O-C(O)R³, wherein R³ preferably represents an alkyl group, preferably a C₁-C₆ alkyl group, and more preferably a methyl or ethyl group, halogen groups such as Cl and Br, amino groups optionally substituted with one or two functional groups such as an alkyl or silane group, for example the NHSiMe₃ group, alkylenoxy groups such as the isopropenoxy group, trialkylsiloxy groups, for example the trimethylsiloxy group.

The X groups are preferably alkoxy groups, in particular methoxy, ethoxy, propoxy or butoxy, more preferably methoxy or ethoxy. In this case, compounds of formula I are alkoxysilanes.

The integers n' and m define three groups of compounds I: compounds of formula RYSi(X)₂, compounds of formula Y₂Si(X)₂, and compounds of formula YSi(X)₃. Among these compounds, epoxysilanes having the formula YSi(X)₃ are preferred.

The monovalent R groups linked to the silicon atom through a Si-C bond are organic groups. These groups may be, without limitation, hydrocarbon groups, either saturated or unsaturated, preferably C₁-C₁₀ groups and better C₁-C₄ groups, for example an alkyl group, preferably a C₁-C₄ alkyl group such as methyl or ethyl, an aminoalkyl group, an alkenyl group, such as a vinyl group, a C₆-C₁₀ aryl group, for example an optionally substituted phenyl group, in particular a phenyl group substituted with one or more C₁-C₄ alkyl groups, a benzyl group, a (meth)acryloxyalkyl group, or a fluorinated or perfluorinated group corresponding to the above cited hydrocarbon groups, for example a fluoroalkyl or perfluoroalkyl group, or a (poly)fluoro or perfluoro alkoxy[(poly)alkyloxy]alkyl group.

The most preferred R groups are alkyl groups, in particular C₁-C₄ alkyl groups, and ideally methyl groups.

The monovalent Y groups linked to the silicon atom through a Si-C bond are organic groups since they contain at least one epoxy function, preferably one epoxy function. By epoxy function, it is meant a group of atoms, in which an oxygen atom is directly linked to two adjacent carbon atoms or non adjacent carbon atoms comprised in a carbon containing chain or a cyclic carbon containing system. Among epoxy functions, oxirane functions are preferred, i.e. saturated three-membered cyclic ether groups.

Epoxysilanes compounds of formula (I) provide a highly cross-linked matrix. The preferred epoxysilanes have an organic link between the Si atom and the epoxy function that provides a certain level of flexibility.

The preferred Y groups are groups of formulae III and IV: 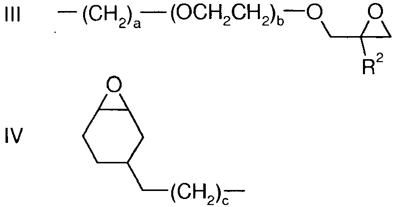 in which R² is an alkyl group, preferably a methyl group, or a hydrogen atom, ideally a hydrogen atom, a and c are integers ranging from 1 to 6, and b is 0, 1 or 2.

The preferred group having formula III is the γ-glycidoxypropyl group (R² = H, a = 3, b = 0) and the preferred (3,4-epoxycyclohexyl)alkyl group of formula IV is the β-(3,4-epoxycyclohexyl)ethyl group (c = 1). The γ-glycidoxyethoxypropyl group may also be employed (R²=H, a = 3,b = 1).

Preferred epoxysilanes of formula I are epoxyalkoxysilanes, and most preferred are those having one Y group and three alkoxy X groups. Particularly preferred epoxytrialkoxysilanes are those of formulae V and VI: 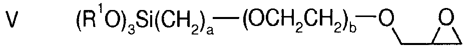 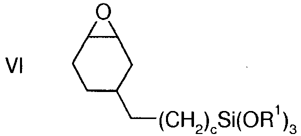 in which R¹ is an alkyl group having 1 to 6 carbon atoms, preferably a methyl or ethyl group, and a, b and c are such as defined above.

Examples of such epoxysilanes include but are not limited to glycidoxy methyl trimethoxysilane, glycidoxy methyl triethoxysilane, glycidoxy methyl tripropoxysilane, α-glycidoxy ethyl trimethoxysilane, α-glycidoxy ethyl triethoxysilane, β-glycidoxy ethyl trimethoxysilane, β-glycidoxy ethyl triethoxysilane, β-glycidoxy ethyl tripropoxysilane, α-glycidoxy propyl trimethoxysilane, α-glycidoxy propyl triethoxysilane, α-glycidoxy propyl tripropoxysilane, β-glycidoxy propyl trimethoxysilane, β-glycidoxy propyl triethoxysilane, β-glycidoxy propyl tripropoxysilane, γ-glycidoxy propyl trimethoxysilane, γ-glycidoxy propyl triethoxysilane, γ-glycidoxy propyl tripropoxysilane, 2-(3,4-epoxycyclohexyl) ethyltrimethoxysilane, 2-(3,4-epoxycyclohexyl) ethyltriethoxysilane. Other useful epoxytrialkoxysilanes are described in Patents US 4,294,950, US 4,211,823, US 5,015,523, EP 0614957 and WO 94/10230. Among those silanes, γ-glycidoxypropyltrimethoxysilane (GLYMO) is preferred.

Preferred epoxysilanes of formula I having one Y group and two X groups include, but are not limited to, epoxydialkoxysilanes such as γ-glycidoxypropyl-methyl-dimethoxysilane, γ-glycidoxypropyl bis(trimethylsiloxy) methylsilane, γ-glycidoxypropyl-methyl-diethoxysilane, γ-glycidoxypropyl-methyl-diisopropenoxysilane, and γ-glycidoxyethoxypropyl-methyl-dimethoxysilane. When epoxy dialkoxysilanes are used, they are preferably combined with epoxytrialkoxysilanes such as those described above, and are preferably employed in lower amounts than said epoxytrialkoxysilanes.

It has been surprisingly found that the compound of formula (A) was responsible for an increase in the abrasion resistance of epoxysilane-based antistatic coatings (preferably epoxyalkoxysilanes, more preferably epoxy di- or tri-alkoxy silane based coatings). In other words, antistatic coatings prepared from compositions according to the invention comprising at least one compound of formula (I) as a binder exhibit abrasion resistance properties, which are higher than those obtained from the corresponding compositions without any compound of formula (A). Such coatings can therefore be used as transparent, antistatic hard coats.

In one embodiment of the invention, the binder of the antistatic composition further comprises at least one compound of formula:

RₙSi(z)₄₋ₙ (II)

or a hydrolyzate thereof, in which the R groups are identical or different and represent monovalent alkyl groups, the Z groups are identical or different and represent hydrolyzable groups or hydrogen atoms, and n is an integer equal to 0, 1 or 2, preferably 0, with the proviso that the Z groups do not all represent a hydrogen atom when n = 0, and preferably do not all represent a hydrogen atom.

Compounds of formula II or their hydrolyzates may be used to improve the cross-linking of the coating obtained from the curable composition of the invention, thereby providing higher hardness and abrasion-resistance.

Silanes of formula II bear three to four Z groups directly linked to the silicon atom, each leading to an OH group upon hydrolysis and one or two monovalent organic R groups linked to the silicon atom. It is worth noting that SiOH bonds may be initially present in the compounds of formula II, which are considered in this case as hydrolyzates. Hydrolyzates also encompass siloxane salts.

The Z groups may represent hydrolyzable groups independently chosen from the hydrolyzable groups which have been previously cited when describing the X groups. Preferably, the Z groups are hydrolyzable groups which are identical or different.

The most preferred R groups are C₁-C₄ alkyl groups, such as methyl, ethyl, n-propyl, i-propyl, n-butyl, i-butyl, preferably methyl groups.

Most preferred compounds of formula II are those having formula Si(Z)₄. Examples of such compounds are tetraalkoxysilanes such as tetraethoxysilane Si(OC₂H₅)₄ (TEOS), tetramethoxysilane Si(OCH₃)₄ (TMOS), tetra(n-propoxy)silane, tetra(i-propoxy)silane, tetra(n-butoxy)silane, tetra(sec-butoxy)silane or tetra(t-butoxy)silane, preferably TEOS.

Compounds of formula II may also be chosen from compounds of formula RSi(Z)₃, for example methyl triethoxysilane (MTEOS).

Silanes present in the curable antistatic composition may be hydrolyzed partially or totally, preferably totally. Hydrolyzates can be prepared in a known manner, e.g. such as disclosed in FR 2702486 and US 4,211,823. Hydrolysis catalysts such as hydrochloric acid or acetic acid may be used to promote the hydrolysis reaction over the condensation reaction.

The above cited binders are only examples of binders which may be used in the invention, which is not limited to that list. The person skilled in the art will easily recognize other categories of compounds which may be used as binders of the present antistatic coating composition.

Some antistatic coating compositions comprising a binder and a conductive polymer are commercially available and can be used in the invention, such as for example composition D 1012 W (aqueous dispersion of polyaniline), commercialized by Ormecon Chemie GmbH, or the following compositions based on the Baytron^{®} P dispersion, all commercialized by H. C. Starck : CPUD-2 (polyurethane binder), CPP 105D (GLYMO binder), CPP 103D (aliphatic polyester-polyurethane binder), CPP 116.6D and CPP 134.18D (polyurethane + GLYMO binders). A preferred coating composition is composition CPP 105D, which dry extract is around 1.5% by weight. It leads to antistatic coatings having good adhesion properties to organic or mineral glass substrates.

Another preferred coating composition is a composition based on the Baytron^{®} P dispersion further comprising a polyurethane latex as a binder precursor, most preferably Witcobond^{®} 240 or 234. Said coating composition generally comprises a 0.9:1 to 2.5:1 weight ratio of Baytron^{®} P / Witcobond^{®} 240 or 234.

The binder, which includes compounds of formula I and II but not fillers, is generally comprised in the antistatic coating composition in an amount ranging from 1 to 20% by weight based on the total weight of the antistatic composition, preferably from 2 to 15%.

In some embodiments, the antistatic composition does not comprise any compound of formula II. Preferably, the antistatic composition does not comprise any compounds of formula II when fillers are present in said composition.

Since the antistatic coating composition comprises a binder, it may be cross-linked or cured owing to the presence of at least one cross-linking agent which preferably is soluble or dispersible in water. These cross-linking agents are well known and react with functional groups of the binder, such as carboxyl or hydroxyl groups. They may be chosen from polyfunctional aziridines, methoxyalkylated melamine or urea resins, for example methoxyalkylated melamine/formaldehyde and urea/formaldehyde resins, epoxy resins, carbodiimides, polyisocyanates, triazines and blocked polyisocyanates. Preferred cross-linking agents are aziridines, in particular trifunctional aziridines.

The antistatic composition optionally comprises a catalytic amount of at least one curing catalyst, so as to accelerate the curing step. Examples of curing catalysts are photo-initiators that generate free radicals upon exposure to ultraviolet light or heat such as organic peroxides, azo compounds, quinones, nitroso compounds, acyl halides, hydrazones, mercapto compounds, pyrylium compounds, imidazoles, chlorotriazines, benzoin, benzoin alkyl ethers, diketones, phenones, and mixtures thereof.

The antistatic composition may also comprise a curing catalyst such as aluminum acetylacetonate Al(AcAc)₃, a hydrolyzate thereof or carboxylates of metals such as zinc, titanium, zirconium, tin or magnesium. Condensation catalysts such as saturated or unsaturated polyfunctional acids or acid anhydrides may also be used, in particular maleic acid, itaconic acid, trimellitic acid or trimellitic anhydride. Numerous examples of curing and/or condensation catalysts are given in "Chemistry and Technology of the Epoxy Resins", B. Ellis (Ed.) Chapman Hall, New York, 1993 and "Epoxy Resins Chemistry and Technology" 2eme edition, C. A. May (Ed.), Marcel Dekker, New York, 1988.

In general, the catalysts described above are used according to the invention in an amount ranging from 0.01 to 10%, preferably from 0.1 to 5% by weight based on the total weight of the curable antistatic composition.

In some embodiments, the antistatic composition comprises fillers, generally nanoparticles (or nanocrystals), for increasing the hardness and/or the refractive index of the cured coating. The nanoparticles may be organic or inorganic. A mixture of both can also be used. Preferably, inorganic nanoparticles are used, especially metallic or metalloid oxide, nitride or fluoride nanoparticles, or mixtures thereof. The nanoparticles (fillers) are preferably not electrically conductive.

By "nanoparticles", it is meant particles which diameter (or longest dimension) is lower than 1 µm, preferably lower than 150 nm and still better lower than 100 nm. In the present invention, fillers or nanoparticles preferably have a diameter ranging from 2 to 100 nm, more preferably from 2 to 50 nm, and even better from 5 to 50 nm.

Suitable inorganic nanoparticles are for example nanoparticles of aluminum oxide Al₂O₃, silicon oxide SiO₂, zirconium oxide ZrO₂, titanium oxide TiO₂, antimony oxide Sb₂O₅, tantalum oxide Ta₂O₅, zinc oxide, tin oxide SnO₂, indium oxide, cerium oxide, Si₃N₄, MgF₂ or their mixtures.

It is also possible to use particles of mixed oxides or composite particles, for example those having a core/shell structure. Using different types of nanoparticles allows making hetero-structured nanoparticles layers.

Preferably, the nanoparticles are particles of aluminum oxide, tin oxide, zirconium oxide or silicon oxide SiO₂, more preferably SiO₂ nanoparticles. Mineral fillers are preferably used under colloidal form, i.e. under the form of fine particles dispersed in a dispersing medium such as water, an alcohol, a ketone, an ester or mixtures thereof, preferably an alcohol.

When fillers are present, they are generally used in an amount ranging from 0.5 to 10% by weight based on the total weight of the antistatic composition, preferably from 1 to 8%. In some embodiments, the antistatic composition does not comprise any filler such as nanoparticles.

The antistatic coating composition comprises at least one solvent, preferably a polar solvent, like water, an alcohol, or mixtures thereof, preferably a mixture of water and a water-miscible alcohol, e.g. methanol, ethanol, n-propanol, isopropanol, n-butanol, isobutanol, sec-butanol, tert-butanol, n-amylic alcohol, isoamylic alcohol, sec-amylic alcohol, tert-amylic alcohol, 1-ethyl-1-propanol, 2-methyl-1-butanol, 1-methoxy-2-propanol n-hexanol, cyclohexanol, ethyl cellosolve (monoethoxy ethylene glycol), and ethylene glycol.

It is also possible to add an appropriate amount of another hydrophilic organic solvent in said composition in order to improve the dissolution of the conductive polymer, or increase compatibility of the binder with the composition. To this end, organic solvents such as NMP, acetone, tetrahydrofuran, DMSO, DMAc, triethylamine or DMF may be employed, without being limited to this solvent list. However, the antistatic coating composition preferably only comprises environmentally benign solvents, such as water and/or C₁-C₄ alcohols.

The solvent or mixture of solvents may represent from 50 to 99 % by weight, relative to the weight of the coating composition, preferably from 50 to 90 %, more preferably from 60 to 90 %. Although the compound of formula (A) may be seen as being a solvent in some cases (for example when it is a liquid), it is not considered as being a solvent within the meaning of the present invention.

The antistatic coating composition may also comprise at least one non ionic or ionic surfactant, i.e. anionic, cationic or amphoteric surfactant, to improve the wettability of the coating solution or the optical quality of the deposit. A particularly preferred class of surfactants comprises fluorinated surfactants, preferably anionic fluorinated surfactants.

Fluorinated surfactants are known and described generally in "Fluorinated Surfactants" by E. Kissa, Surfactants Science Series, Vol. 50 (Marcel Dekker, New York 1994). Fluorinated surfactants include perfluoroalkanoic acids and salts thereof, in particular perfluorooctanoic acids and salts thereof, such as ammonium perfluorooctanoic acid, fluorinated polyethers or perfluoropolyether surfactants such as disclosed in EP 1059342, EP 712882, EP 752432, EP 816397, US 6,025,307, US 6,103,843 and US 6,126,849. Further fluorinated surfactants are disclosed in US 5,229,480, US 5,763,552, US 5,688,884, US 5,700,859, US 5,804,650, US 5,895,799, WO 00/22002 and WO 00/71590. Fluorinated polyethers derived from hexafluoropropyleneoxide have been described in US 2005/096244. Another class of fluorinated surfactants includes fluorocarbon modified polysiloxane surfactants, e.g. polyalkyleneoxide-modified heptamethyltrisiloxane allyloxypolyethyleneglycol surfactant.

The surfactant or mixture of surfactants may represent from 0.001 % to 5 % by weight, relative to the weight of the coating composition.

The antistatic composition may also contain various additives conventionally used in polymerizable compositions, in conventional proportions. These additives include stabilizers such as antioxidants, UV light absorbers, light stabilizers, anti-yellowing agents, adhesion promoters, dyes, photochromic agents, pigments, rheology modifiers, lubricants, cross-linking agents, photo-initiators fragrances, deodorants and pH regulators (particularly in the case of antistatic agents such as polypyrroles or polyanilines). They should neither decrease the effectiveness of the antistatic agent nor deteriorate optical properties of the article.

The antistatic coating composition according to the invention generally has a theoretical dry extract weight which represents less than 50 % of the total weight of the composition, and preferably ranging from 0.2 to 30 %, even better from 0.2 to 20 %, which includes both required compounds (antistatic agent, binder...) and optional compounds.

By "theoretical dry extract weight of a component in a composition," it is meant the theoretical weight of solid matter of this component in said composition. The theoretical dry extract weight of a composition is defined as the sum of the theoretical dry extract weights of each of its components. As used herein, the theoretical dry extract weight of compounds of formula I or II is the calculated weight in R_{n'}YₘSi(O)(_{4-n'-m})_{/2} or RₙSi(O)(₄₋ₙ)_{/2} units, wherein R, Y, n, n' and m are such as defined previously.

Although the weight content of conductive polymers in the coating composition is not particularly limited, it preferably ranges from 0.04 to 15 % by weight relative to the total weight of the composition, more preferably from 0.05 to 5 %, better from 0.05 to 0.5% and even better from 0.05 to 0.35%. Beyond 15-20 % by weight, the antistatic coating composition is generally too viscous and the resulting antistatic coating may show transmittance lower than 85%, while below 0.05 %, the composition may be too diluted and the resulting coating may not exhibit antistatic properties.

Preferably, the binder is used in such an amount that the ratio of total weight of solid binder components (dry extract weight of binder) / total weight of the composition ranges from 2 to 15%, preferably from 3 to 12%.

Preferably, the ratio of conductive polymers weight/ dry extract weight of solid binder components in the coating composition ranges from 0.4 to 10%, more preferably from 0.4 to 5%, even better from 0.4 to 3%, the best range being from 0.4 to 2%. The use such a low content of conductive polymer is made possible by the addition of the inventive compound of formula (A), which allows to obtain elevated antistatic properties.

The antistatic coating composition allows to achieve a sufficient electrical conduction, so that it is not necessary to add additional conductive compounds.

In a preferred embodiment, the antistatic composition according to the invention comprises less than 1% by weight based on the total weight of the antistatic composition, of carbon nanotubes or other electrically conductive fillers, which are generally oxides such as ITO (tin oxide doped with indium), ATO (tin oxide doped with antimony), zinc antimonate (ZnSb₂O₆), indium antimonate (InSbO₄), or SrTiO₃, preferably less than 0.5% by weight and even better 0%. Within the meaning of the invention, oxides such as SiO₂, Al₂O₃, ZrO₂, SnO₂ and mixtures thereof are not considered to be electrically conductive oxides (fillers). Preferably, the antistatic composition does not contain any carbon nanotubes or electrically conductive fillers.

The inventive antistatic coating is formed at the surface of an optical article by liquid phase deposition or lamination according to any appropriate method, starting from the above described liquid antistatic coating composition. Application of said composition may be carried out, without limitation, by spin coating, dip coating, spray coating, brush coating, roller coating. Spin coating and dip coating are preferred.

After application of the antistatic coating composition onto the surface of the optical article, the composition may be dried or cured, if necessary, according to any appropriate method, for example drying with air, in an oven or by using a drier, so as to provide a conductive transparent film. Generally, a temperature of 50-130°C is employed. A higher temperature and/or a longer drying/curing step sometimes allow to improve abrasion resistance of the antistatic coating to the underlying coating or article. The drying/curing step comprises evaporation of the solvents and solidification of the binder. In the case of cross-linkable binders, the deposited composition is exposed to an appropriate energy source so as to initiate polymerization and curing of the binder.

According to a particular embodiment, if another coating has to be deposited onto the just deposited antistatic composition layer, said composition must not be subjected to a thermal or UV curing step before deposition of the subsequent upper coating, for example a primer layer. Its curing (or drying) can be performed simultaneously with that of the upper coating.

As explained previously, once the antistatic coating has been obtained that comprises at least one conductive polymer and at least one cured binder, additional coatings may be deposited onto said antistatic coating, for example an impact resistant primer coating and/or an abrasion and/or scratch resistant coating.

Several successive depositions of antistatic layers according to the invention may be performed at the surface of the optical article. In this case, a single drying step of the whole antistatic stack is preferably performed.

Thickness of the antistatic coating in the final optical article preferably ranges from 5 to 5000 nm, more preferably from 5 to 3000 nm, even more preferably from 50 to 2000 nm.

The compositions according to the invention provide coatings with better antistatic properties than those with the same thickness obtained from compositions without any additive. This also allows to prepare antistatic coatings having less thickness than conventional antistatic coatings but the same or a higher level of antistatic performance, thereby increasing the optical transmittance of the coating, or to prepare antistatic coatings having a higher thickness than conventional antistatic coatings and consequently a higher level of antistatic performance, but that still remain optically transparent.

Although most conductive polymers absorb in the visible range, the conductive polymer content is low in the present antistatic coating. As a consequence, thicknesses as high as a few micrometers can be used for said coating without significantly decreasing the optical transparency of the coated article. However, if the thickness of the AS coating becomes too high (> 5-10 µm), the relative transmission factor of light in the visible range of the optical article may significantly drop. The PEDT/PSS polymer, for example, absorbs high wavelengths of the visible range (near IR). A too thick film made of this polymer will consequently have a bluish color. On the contrary, if thickness of the AS coating is too thin, it does not exhibit antistatic properties.

It is possible to apply other coatings onto the antistatic coating, such as an antireflection coating and/or an anti-fouling top coat. Other coatings such as a polarized coating, a photochromic coating, a dyeing coating or an adhesive layer, for example an adhesive polyurethane layer, may also be applied onto said antistatic coating.

The present coating composition can be used in the ophthalmic lens industry to prepare antistatic lenses, but also for general antistatic purpose in the field of photographic films, electronics or food packaging and imaging materials. Particular non limiting uses include electromagnetic windows, optically transparent conductors for display devices and electromagnetic radiation shielding.

Its advantages are numerous and include applicability to most of substrates with good adhesion, in particular plastic substrates, and the production of optical articles having high transmittance, low haze, high electrical conductivity, excellent antistatic properties while maintaining excellent adhesion of the coatings.

The present invention provides optical articles having charge decay times ≤ 500 milliseconds, preferably ≤ 200 milliseconds, more preferably ≤ 150 milliseconds and better ≤ 100 milliseconds, when coated on one main surface with the above described antistatic coating or the two main faces of the optical article. The examples that will be described later only show the convex side of coatings.

The final optical articles do preferably not absorb light in the visible range (or little), which means herein that when coated on one side with the inventive antistatic coating, the optical article has a luminous absorption in the visible range due to the antistatic coating of preferably 1% or less, more preferably less than 1%, and/or a relative light transmission factor in the visible spectrum, Tv, preferably higher than 90%, more preferably higher than 91%, and even more preferably higher than 92%. Preferably, both features are simultaneously satisfied and can be reached by carefully controlling thicknesses of the coatings and the content of conductive polymers. As used herein, a "transparent" optical article is an optical article having a Tv higher than 90%, more preferably higher than 91%, and even more preferably higher than 92%. The Tv factor is such as defined in the standard NF EN 1836 and corresponds to the 380-780 nm wavelength range.

In an alternative embodiment, the optical article may be tinted or dyed and absorb light in the visible range.

The final optical articles prepared according to the invention preferably have low haze characteristics. Haze is a measurement of the transmitted light scattered more than 2.5° from the axis of the incident light. The smaller the haze value, the lower the degree of cloudiness. The haze value of the present optical articles is preferably less than 0.8%, more preferably less than 0.4% and even better less than 0.25%.

The invention also relates to a process for preparing a transparent, antistatic and optionally abrasion- and/or scratch-resistant optical article, comprising:
- providing an optical article comprising a substrate having at least one main surface,
- applying onto at least part of said at least one main surface of the substrate a curable composition such as described previously, and curing said composition.

The present optical articles can be processed simply and at low temperature (≤ 100°C), using environment friendly solvents (alcohol or water/alcohol co-solvent). The present process is flexible and allows incorporation of other functional coatings onto the substrate.

The invention further relates to the use of a compound of formula (A) in a curable composition, for improving the antistatic properties of the coating obtained from curing said composition.

Now, the present invention will be described in more detail with reference to the following examples. These examples are provided only for illustrating the present invention and should not be construed as limiting the scope of the present invention.

### EXAMPLES

### 1. Testing methods

The following test procedures were used to evaluate the optical articles prepared according to the present invention. Three samples for each system were prepared for measurements and the reported data were calculated in the average of three data.

### a) Charge decay time

In the present patent application, charge decay times of optical articles which have been beforehand subjected to a corona discharge at 9000 volts were measured using JCI 155v5 Charge Decay Test Unit from John Chubb Instrumentation at 25.4°C and 50% relative humidity.

The unit was set up with JCI 176 Charge Measuring Sample Support, JCI 191 Controlled Humidity Test Chamber, JCI 192 Dry Air Supply Unit and Calibration of voltage sensitivity and decay time measurement performance of JCI 155 to the methods specified in British Standard and Calibration voltage measurements and resistor and capacitor values traceable to National Standards.

### b) Dry Adhesion test (crosshatch test)

Dry adhesion of the transferred coatings was measured using the cross-hatch adhesion test according to ASTM D3359-93, by cutting through the coatings a series of 5 lines, spaced 1 mm apart with a razor, followed by a second series of 5 lines, spaced 1 mm apart, at right angles to the first series, forming a crosshatch pattern comprising 25 squares. After blowing off the crosshatch pattern with an air stream to remove any dust formed during scribing, clear cellophane tape (3M SCOTCH^{®} n° 600) was then applied over the crosshatch pattern, pressed down firmly, and then rapidly pulled away from coating in a direction perpendicular to the coating surface. Application and removal of fresh tape was then repeated two additional times. Adhesion is rated as follows (0 is the best adhesion, 1-4 is in the middle, and 5 is the poorest adhesion):

| Adhesion score | Squares removed | Area % left intact |
|---|---|---|
| 0 | 0 | 100 |
| 1 | <1 | > 96 |
| 2 | 1 to 4 | 96-84 |
| 3 | > 4 to 9 | 83-64 |
| 4 | > 9 to 16 | 63-36 |
| 5 | >16 | < 36 |

### c) Determination of the abrasion resistance ("ISTM Bayer test" or "Bayer alumina")

The Bayer abrasion test is a standard test used to determine the abrasion resistance of curved/lens surfaces. Determination of the Bayer value was performed in accordance with the standards ASTM F735-81 (Standard Test Method for Abrasion Resistance of Transparent Plastics and Coatings Using Oscillating Sand Method), except that the sand is replaced by alumina.

Per this test, a coated lens and an uncoated lens (reference lens of similar curvature, diameter, thickness and diopter) were subjected to an oscillating abrasive box (using approximately 500 g of aluminum oxide ZF 152412 supplied by Specialty Ceramic Grains, former Norton Materials) for 300 cycles of abrasion in 2 minutes.

The haze H of both the reference and coated sample were then measured with a Haze Guard Plus meter, in accordance with ASTM D1003-00, before and after the test has been performed. The results are expressed as a calculated ratio of the reference lens to the coated lens (Bayer value = H_{standard} / Hₛₐₘₚₗₑ). The Bayer value is a measure of the performance of the coating, with a higher value meaning a higher abrasion resistance.

### d) Scratch-resistance : Hand Steel wool test (HSW)

The HSW test was implemented on the convex side of the lens only. Waiting time of 24 hours is respected to perform the test if an antireflection coating is deposited on the lens.

The lens was manually abraded with a steel wool perpendicularly to fibers direction performing 5 back and forth (with an amplitude from 4 to 5 cm) keeping an index finger constant pressure on the steel wool. Strength pressed on the steel wool can be evaluated with a balance: fix the lens on the balance plate with adhesive tape and press down the lens with the index finger exercising normally strength on the lens. This strength is about 5 Kg during the first way and about 2.5Kg during the return way. Lenses were visually inspected and noted according to the following table. The higher is the note, the more abraded is the lens.

| | | | |
|---|---|---|---|
| Number of scratches | > 50 | 11-50 | ≤ 10 |
| Note | 5 | 3 | 1 |
| Risk level | High | Acceptable | Low |

### e) Haze value, Tv and thickness

The haze value of the final optical article was measured by light transmission utilizing the Haze-Guard Plus haze meter from BYK-Gardner (a color difference meter) according to the method of ASTM D1003-00, which is incorporated herein in its entirety by reference. All references to "haze" values in this application are by this standard. The instrument was first calibrated according to the manufacturer's directions. Next, the sample was placed on the transmission light beam of the pre-calibrated meter and the haze value was recorded from three different specimen locations and averaged. Tv was measured using the same device.

Thickness of the films was evaluated by ellipsometer (thickness < 1µm) equipped with M-44^{™}, EC-270 and LPS-400 with 75W Xenon Light Source from J. A. Woollam Co. Inc. or with a Metricon Model 2010 Prism Coupler apparatus (thickness > 1µm) from Metricon Corporation.

### 2. Experimental details

### a) General considerations

Coating solutions were prepared by mixing GLYMO, 0.1 N HCl and an SiO₂ nanoparticle aqueous dispersion in methanol (15 nm size, solid content (or dry extract) 33-35%), under agitation for 12 h, followed by dispersing with 2-butanol (except for examples 9-12), Al(AcAc)₃, a fluorinated surfactant (FC-4430), a Baytron^{®} PH500 (1.2 wt% of conductive polymer in the Baytron PH 500 solution) aqueous solution and either diethyleneglycol dimethylether, poly(ethyleneglycol) dimethylether of various molecular weights or a comparative additive (comparative examples C2-C9), or no additive (comparative examples C1, C10, C13). See Table 1 below.

**Table 1**

| Example | Additive |
|---|---|
| 1-8 (invention) | Diethyleneglycol dimethylether M = 134 g/mol |
| C1, C10, C13 | — |
| C2-C4 | DMSO |
| C5-C7 | Diethylene glycol |
| C8 | Diethyleneglycol monomethylether |
| C9 | Polyethylene glycol |
| C11-C12 | 1,2-dimethoxyethane |
| 9 (invention) | Poly(ethyleneglycol) dimethylether M = 250 g/mol |
| 10 (invention) | Poly(ethyleneglycol) dimethylether M = 500 q/mol |
| 11 (invention) | Poly(ethyleneglycol) dimethylether M = 1000 g/mol |
| 12 (invention) | Poly(ethyleneglycol) dimethylether M = 2000 g/mol |

The SiO₂ nanoparticles aqueous dispersion (A2034, 33-35 wt% of nanoparticles, ~15 nm diameter) was purchased from EKa Chemicals. FC-4430 surfactant was purchased from 3M. Polyethylene glycol (PEG) used in comparative example 9 (from Aldrich) has an average molecular weight Mn = 14,000.

### b) Preparation of coated optical articles

The optical articles used in the examples were round lenses (plano or -2.00 with a diameter of 68 mm) comprising an ORMA^{®} substrate (obtained by polymerizing CR-39^{®} diethylene glycol bis(allyl carbonate) monomer).

The convex surface of the substrate was first corona treated and then spin-coated at 500/1000 rpm with an antistatic composition, which was pre-cured at 75°C for 15 minutes and post-cured at 100°C for 3 hours. The final coating has a thickness of 1.7±0.2µm.

### c) Details of coating formulations

The coating formulations used in the examples are described in Tables 2-4. The figures in the tables are weight percentages. In examples 2-12, the amount of Baytron^{®} PH500 was decreased to 8.5wt% for each coating formulation (9.2 wt% in example 1) and the amount of compound having formula (A) was varied from 0.5wt% till 10wt%. Several contents were investigated for the comparative additives DMSO and diethylene glycol (2, 5, and 10 wt%).

**Table 2**

| Example | 1 | C1 | C2 | C3 | C4 | C5 | C6 | C7 | C8 | C9 |
|---|---|---|---|---|---|---|---|---|---|---|
| GLYMO | 13.56 | 13.56 | 13.56 | 13.56 | 13.56 | 13.56 | 13.56 | 13.56 | 13.56 | 13.56 |
| 0.1N HCl | 3.75 | 3.75 | 3.75 | 3.75 | 3.75 | 3.75 | 3.75 | 3.75 | 3.75 | 3.75 |
| SiO₂ nanoparticles (*) | 18.24 | 18.24 | 18.24 | 18.24 | 18.24 | 18.24 | 18.24 | 18.24 | 18.24 | 18.24 |
| MeOH | 31.9 | 31.9 | 31.9 | 31.9 | 31.9 | 31.9 | 31.9 | 31.9 | 31.9 | 31.9 |
| Butanol | 2.24 | 2.24 | 2.24 | 2.24 | 2.24 | 2.24 | 2.24 | 2.24 | 2.24 | 2.24 |
| H₂O | 15.1 | 20.1 | 18.1 | 15.1 | 10.1 | 18.1 | 15.1 | 10.1 | 15.1 | 15.1 |
| Al(AcAc)₃ | 0.91 | 0.91 | 0.91 | 0.91 | 0.91 | 0.91 | 0.91 | 0.91 | 0.91 | 0.91 |
| Fluorinated surfactant | 0.1 | 0.1 | 0.1 | 0.1 | 0.1 | 0.1 | 0.1 | 0.1 | 0.1 | 0.1 |
| Baytron^{®} PH500 | 9.2 | 9.2 | 9.2 | 9.2 | 9.2 | 9.2 | 9.2 | 9.2 | 9.2 | 9.2 |
| Additive | **5** | **0** | **2** | **5** | **10** | **2** | **5** | **10** | **5** | **5** |
| Total | 100 | 100 | 100 | 100 | 100 | 100 | 100 | 100 | 100 | 100 |

| | | | | | | | | | | |
|---|---|---|---|---|---|---|---|---|---|---|
| (*) Aqueous dispersion | | | | | | | | | | |

**Table 3**

| Example | 2 | 3 | 4 | 5 | 6 | 7 | 8 | C10 | C11 | C12 |
|---|---|---|---|---|---|---|---|---|---|---|
| GLYMO | 13.56 | 13.56 | 13.56 | 13.56 | 13.56 | 13.56 | 13.56 | 13.56 | 13.56 | 13.56 |
| 0.1N HCl | 3.75 | 3.75 | 3.75 | 3.75 | 3.75 | 3.75 | 3.75 | 3.75 | 3.75 | 3.75 |
| SiO₂ nanoparticles (*) | 18.24 | 18.24 | 18.24 | 18.24 | 18.24 | 18.24 | 18.24 | 18.24 | 18.24 | 18.24 |
| MeOH | 31.9 | 31.9 | 31.9 | 29.6 | 27.6 | 25.1 | 22.6 | 31.9 | 31.9 | 31.9 |
| Butanol | 2.24 | 2.24 | 2.24 | 2.24 | 2.24 | 2.24 | 2.24 | 2.24 | 2.24 | 2.24 |
| H₂O | 20.3 | 19.8 | 18.8 | 20.1 | 20.1 | 20.1 | 20.1 | 20.8 | 19.8 | 18.8 |
| Al(AcAc)₃ | 0.91 | 0.91 | 0.91 | 0.91 | 0.91 | 0.91 | 0.91 | 0.91 | 0.91 | 0.91 |
| Fluorinated surfactant | 0.1 | 0.1 | 0.1 | 0.1 | 0.1 | 0.1 | 0.1 | 0.1 | 0.1 | 0.1 |
| Baytron^{®} PH500 | 8.5 | 8.5 | 8.5 | 8.5 | 8.5 | 8.5 | 8.5 | 8.5 | 8.5 | 8.5 |
| Additive | **0.5** | **1** | **2** | **3** | **5** | **7.5** | **10** | **0** | **1** | **2** |
| Total | 100 | 100 | 100 | 100 | 100 | 100 | 100 | 100 | 100 | 100 |

| | | | | | | | | | | |
|---|---|---|---|---|---|---|---|---|---|---|
| (*) Aqueous dispersion | | | | | | | | | | |

**Table 4**

| Example | C13 | 9 | 10 | 11 | 12 |
|---|---|---|---|---|---|
| GLYMO | 13.6 | 13.6 | 13.6 | 13.6 | 13.6 |
| 0.1N HCl | 3.43 | 3.43 | 3.43 | 3.43 | 3.43 |
| SiO₂ nanoparticles (*) | 18.18 | 18.18 | 18.18 | 18.18 | 18.18 |
| MeOH | 36.38 | 34.38 | 34.38 | 34.38 | 34.38 |
| Butanol | 0 | 0 | 0 | 0 | 0 |
| H₂O | 18.83 | 18.83 | 18.83 | 18.83 | 18.83 |
| Al(AcAc)₃ | 0.96 | 0.96 | 0.96 | 0.96 | 0.96 |
| Fluorinated surfactant | 0.1 | 0.1 | 0.1 | 0.1 | 0.1 |
| Baytron^{®} PH500 | 8.52 | 8.52 | 8.52 | 8.52 | 8.52 |
| Additive | **0** | **2** | **2** | **2** | 2 |
| Total | 100 | 100 | 100 | 100 | 100 |

| | | | | | |
|---|---|---|---|---|---|
| (*) Aqueous dispersion | | | | | |

### d) Coating performances

The performance test data of the prepared antistatic optical articles are collected in Table 5.

**Table 5**

| Example | Tv (%) | Haze (%) | Dry adhesion | ISTM Bayer | HSW | Charge decay time (ms) |
|---|---|---|---|---|---|---|
| 1 | 91.5 | 0.12 | 0 | 7.75 | 3 | 49.8 |
| *C1 (Ref.)* | *91.6* | *0.15* | *0* | *6.83* | *3* | *136* |
| C2 | **89.7** | **0.41** | 0 | **5.84** | 3 | 44.9 |
| C3 | 91.5 | 0.16 | 0 | **5.24** | 3 | 47.8 |
| C4 | 91.7 | 0.12 | 0 | **4.63** | 3 | 43.9 |
| C5 | 91.2 | 0.19 | 0 | **4.07** | 3 | 36.1 |
| C6 | 91.6 | 0.14 | 0 | **3.16** | **5** | 27.3 |
| C7 | 91.7 | 0.16 | 0 | 0.91 | **5** | 23.4 |
| C8 | **85.7** | **0.92** | 0 | 7.00 | 3 | 56.6 |
| C9 | 91.7 | 0.11 | 0 | **1.47** | **5** | 43.9 |
| *C10 (Ref.)* | *91.9* | *0.15* | 0 | 6.39 | *3* | *266* |
| C11 | 91.7 | 0.29 | 0 | 8.26 | 3 | **313** |
| C12 | 91.8 | 0.25 | 0 | 6.97 | 3 | **569** |
| 2 | 91.9 | 0.18 | 0 | 8.42 | 1 | 192 |
| 3 | 91.9 | 0.13 | 0 | 7.64 | 1 | 7 |
| 4 | 91.9 | 0.14 | 0 | 7.55 | 1 | 18 |
| 5 | 91.9 | 0.20 | 0 | 9.16 | 3 | 81 |
| 6 | 91.8 | 0.25 | 0 | 7.76 | 3 | 85 |
| 7 | 91.8 | **0.42** | 0 | 8.50 | 3 | 84 |
| 8 | 91.6 | **0.74** | 0 | 9.00 | 3 | 84 |
| *C13 (Ref.)* | *91.9* | *0.22* | *0* | *6.83* | *3* | *286* |
| 9 | 92.0 | 0.18 | 0 | 7.78 | 3 | 142 |
| 10 | 92.0 | 0.17 | 0 | 7.87 | 3 | 188 |
| 11 | 92.1 | 0.17 | 0 | 8.02 | 3 | 153 |
| 12 | 92.1 | 0.16 | 0 | 7.11 | 3 | 137 |

As can be seen from examples 1, C1-C12 and Figure 1/table 5, all additives employed improve the antistatic properties of the coatings, leading to charge decay times of 20-60 ms as compared to the same coating without additive (136 ms), except 1,2-dimethoxyethane (C11-C12), which leads to higher charge decay times as compared to the coating obtained from reference composition C10.

The antistatic coating remains transparent in the visible range after modification with the additive, except in the case of diethyleneglycol monomethylether (comparative example 8), which leads to high haze and low transmittance, despite good abrasion resistance). Haze and transmission results are deceiving in comparative example C2 (additive: DMSO).

The optical articles coated with the inventive coating are the only ones, which exhibit at the same time excellent abrasion resistance, scratch resistance, better antistatic properties than the reference optical articles (without any additive), high optical transparency with about 91-92% of transmittance, and low haze, while maintaining excellent adhesion to the underlying coating (crosshatch test 0). DMSO, ethylene glycol and PEG all lead to lower abrasion resistance as compared to the reference coating (example C1, without additive), and sometimes lower scratch resistance (examples C6, C7 and C9).

## Claims

1. A curable composition, providing, upon curing, a transparent, antistatic coating, comprising:
a) at least one conductive polymer,
b) at least one binder,
c) at least one solvent, and
d) at least one compound of formula:
R¹-O-[(CH₂-CH₂)-O]ₙ-R² (A)
wherein R¹ and R² independently represent an alkyl group, and n is an integer ranging from 2 to 225.

2. The composition according to claim 1, wherein the at least one binder is a compound of formula:
R_{n'}YₘSi(X)_{4-n'-m} (I)
or a hydrolyzate thereof, in which the R groups are identical or different and represent monovalent organic groups linked to the silicon atom through a carbon atom, the Y groups are identical or different and represent monovalent organic groups linked to the silicon atom through a carbon atom and containing at least one epoxy function, the X groups are identical or different and represent hydrolyzable groups or hydrogen atoms, m and n' are integers such that m is equal to 1 or 2 and n' + m = 1 or 2.

3. The composition according to claim 2, wherein the Y groups are chosen from the groups of formulae III and IV: 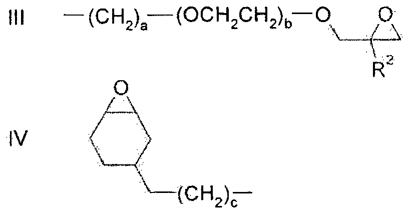 in which R² is an alkyl group, preferably a methyl group, or a hydrogen atom, ideally a hydrogen atom, a and c are integers ranging from 1 to 6, and b is 0, 1 or 2.

4. The composition according to claim 2, wherein the compound of formula I is chosen from epoxytrialkoxysilanes of formula V or VI: 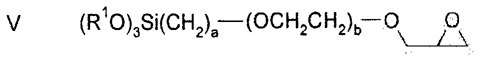 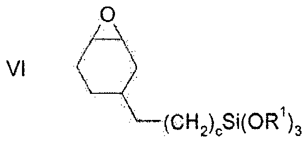 in which R¹ is an alkyl group having 1 to 6 carbon atoms, a and c are integers ranging from 1 to 6, and b is 0, 1 or 2.

5. The composition according to any one of the preceding claims, wherein the at least one compound of formula (A) represent from 0.5 to 20 % by weight, relative to the weight of the coating composition, preferably from 0.5 to 15 %, more preferably from 1 to 10 %.

6. The composition according to any one of the preceding claims, wherein the at least one compound of formula (A) has a molecular weight lower than or equal to 10,000 g/mol, more preferably lower than or equal to 5000 g/mol, most preferably lower than or equal to 2000 g/mol, even better lower than or equal to 400 g/mol.

7. The composition according to any one of the preceding claims, wherein the at least one conductive polymer is chosen from polyanilines, polypyrroles, polythiophenes, polythienothiophenes, polyethylene-imines, polyselenophenes, polyacetylenes, poly(allylamines), preferably from polythiophenes, more preferably polythiophenes polystyrene sulfonates.

8. The composition according to any one of the preceding claims, further comprising fillers, preferably nanoparticles of at least one metal or metalloid oxide.

9. The composition according to any one of the preceding claims, wherein the at least one compound of formula (A) is a poly(ethyleneglycol) dimethyl ether or poly(ethyleneglycol) diethyl ether, preferably diethyleneglycol dimethylether.

10. An optical article comprising a substrate, wherein the substrate is at least partially coated with a transparent antistatic coating formed by depositing onto the substrate and curing a curable composition according to any one of claims 1 to 9.

11. The optical article of claim 10, further defined as having a relative light transmission factor in the visible spectrum Tv higher than 90%, preferably higher than 91%, more preferably higher than 92%.

12. The optical article of any one of claims 10 to 11, further defined as being a lens or lens blank, preferably an ophthalmic lens or lens blank.

13. The optical article of any one of claims 10 to 12, further defined as having a charge decay time ≤ 500 milliseconds, preferably ≤ 200 milliseconds and better ≤ 100 milliseconds.

14. The optical article of any one of claims 10 to 13, wherein the thickness of the antistatic coating ranges from 5 to 5000 nm, more preferably from 5 to 3000 nm, even better from 50 to 2000 nm.

15. A process for preparing a transparent, antistatic an optical article, comprising:
- providing an optical article comprising a substrate having at least one main surface,
- applying onto at least part of said at least one main surface of the substrate a curable composition according to any one of claims 1 to 9, and curing said composition.

## Patentansprüche

1. Härtbare Zusammensetzung, welche nach dem Härten eine transparente, antistatische Beschichtung bildet, fassend:
a) mindestens ein leitfähiges Polymer,
b) mindestens einen Binder,
c) mindestens ein Lösungsmittel, und
d) mindestens eine Verbindung der Formel:
R¹-O-[(CH₂-CH₂)-O]ₙ-R² (A)
wobei R¹ und R² unabhängig voneinander eine Alkylgruppe darstellen und n eine ganze Zahl ist, welche von 2 bis 225 reicht.

2. Zusammensetzung nach Anspruch 1, wobei der mindestens eine Binder eine Verbindung der Formel:
R_{n'}YₘSi(X)_{4-n'-m} (I)
oder ein Hydrolysat davon ist, in welchem die R-Gruppen identisch oder unterschiedlich sind und monovalente organische Gruppen darstellen, die über ein Kohlenstoffatom an das Siliziumatom gebunden sind, die Y-Gruppen identisch oder unterschiedlich sind und monovalente organische Gruppen darstellen, die über ein Kohlenstoffatom an das Siliziumatom gebunden sind und mindestens eine Epoxy-Funktion enthalten, die X-Gruppen identisch oder unterschiedlich sind und hydrolysierbare Gruppen oder Wasserstoffatome darstellen, m und n□ ganze Zahlen sind, so dass m gleich 1 oder 2 ist und n□ + m = 1 oder 2.

3. Zusammensetzung nach Anspruch 2, wobei die Y-Gruppen ausgewählt sind aus den Gruppen der Formeln III und IV: 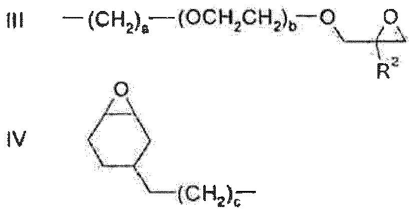 in welchen R² eine Alkylgruppe ist, vorzugsweise eine Methylgruppe oder ein Wasserstoffatom, idealerweise ein Wasserstoffatom, a und c ganze Zahlen sind, welche von 1 bis 6 reichen, und b 0, 1 oder 2 ist.

4. Zusammensetzung nach Anspruch 2, wobei die Verbindung der Formel I ausgewählt ist aus Epoxytrialkoxysilanen der Formel V oder VI: 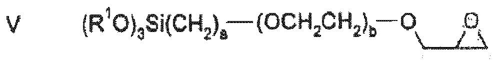 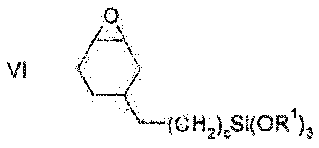 in welchen R¹ eine Alkylgruppe mit 1 bis 6 Kohlenstoffatomen ist, a und c ganze Zahlen sind, welche von 1 bis 6 reichen, und b 0, 1 oder 2 ist.

5. Zusammensetzung nach einem der vorhergehenden Ansprüche, wobei die mindestens eine Verbindung der Formel (A) 0,5 bis 20 Gewichts-% ausmacht, relativ zu dem Gewicht der Beschichtungszusammensetzung, vorzugsweise 0,5 bis 15 %, noch bevorzugter 1 bis 10 %.

6. Zusammensetzung nach einem der vorhergehenden Ansprüche, wobei die mindestens eine Verbindung der Formel (A) ein Molekulargewicht kleiner oder gleich 10.000 g/mol, noch bevorzugter kleiner oder gleich 5000 g/mol, am meisten bevorzugt kleiner oder gleich 2000 g/mol, noch besser kleiner oder gleich 400 g/mol hat.

7. Zusammensetzung nach einem der vorhergehenden Ansprüche, wobei das mindestens eine leitfähige Polymer ausgewählt ist aus Polyanilinen, Polypyrrolen, Polythiophenen, Polythienothiophenen, Polyethylen-Iminen, Polyselenophenen, Polyacetylenen, Poly(allylaminen), vorzugsweise aus Polythiophenen, noch bevorzugter Polythiophen-Polystyren-Sulfonaten.

8. Zusammensetzung nach einem der vorhergehenden Ansprüche, welche weiterhin Füller umfasst, vorzugsweise Nanopartikel aus mindestens einem Metall oder Metalloxid.

9. Zusammensetzung nach einem der vorhergehenden Ansprüche, wobei die mindestens eine Verbindung der Formel (A) ein Poly(ethylenglycol)-dimethylether oder Poly(ethylenglycol)-diethylether, vorzugsweise Diethylenglycol-dimethylether ist.

10. Optischer Artikel, welcher ein Substrat umfasst, wobei das Substrat mindestens teilweise mit einer transparenten, antistatischen Beschichtung beschichtet ist, welche durch Aufbringen auf das Substrat und Härten einer härtbaren Zusammensetzung nach einem der Ansprüche 1 bis 9 gebildet wird.

11. Optischer Artikel nach Anspruch 10, welcher weiterhin definiert wird mit einem relativen Lichttransmissionsfaktor im sichtbaren Spektrum Tv höher als 90 %, vorzugsweise höher als 91 %, noch bevorzugter höher als 92 %.

12. Optischer Artikel nach einem der Ansprüche 10 bis 11, welcher weiterhin definiert wird als eine Linse oder ein Linsenrohling, vorzugsweise eine opthalmische Linse oder Linsenrohling.

13. Optischer Artikel nach einem der Ansprüche 10 bis 12, welcher weiterhin definiert wird mit einer Entladungszeit ≤ 500 Millisekunden, vorzugsweise ≤ 200 Millisekunden und besser ≤ 100 Millisekunden.

14. Optischer Artikel nach einem der Ansprüche 10 bis 13, wobei die Dicke der antistatischen Beschichtung von 5 bis 5000 nm reicht, noch bevorzugter von 5 bis 3000 nm, noch besser von 50 bis 2000 nm.

15. Verfahren für die Herstellung eines transparenten, antistatischen optischen Artikels, umfassend:
- zur Verfügung Stellen eines optischen Artikels, umfassend ein Substrat mit mindestens einer Hauptoberfläche,
- Ausbringen auf mindestens Teil der mindestens einen Hauptoberfläche des Substrats einer härtbaren Zusammensetzung nach einem der Ansprüche 1 bis 9 und Härten der Zusammensetzung.

## Revendications

1. Composition durcissable qui, en durcissant, fournit un revêtement antistatique transparent comprenant :
a) au moins un polymère conducteur,
b) au moins un liant,
c) au moins un solvant, et
d) au moins un composé de formule :
R¹-O-[(CH₂-CH₂)-O]ₙ-R² (A)
dans laquelle R¹ et R² représentent indépendamment un groupe alkyle, et n est un nombre entier allant de 2 à 225.

2. Composition selon la revendication 1, dans laquelle ledit liant est un composé de formule :
R_{n'}YₘSi(X)_{4-n'm} (I)
ou l'un de ses hydrolysats, dans laquelle les groupes R sont identiques ou différents et représentent des groupes organiques monovalents liés à l'atome de silicium via un atome de carbone, les groupes Y sont identiques ou différents et représentent des groupes organiques monovalents liés à l'atome de silicium via un atome de carbone et contenant au moins une fonction époxy, les groupes X sont identiques ou différents et représentent des groupes hydrolysables ou des atomes d'hydrogène, m et n' sont des nombres entiers tels que m vaut 1 ou 2 et n' + m vaut 1 ou 2.

3. Composition selon la revendication 2, dans laquelle les groupes Y sont sélectionnés parmi les groupes de formules III et IV : 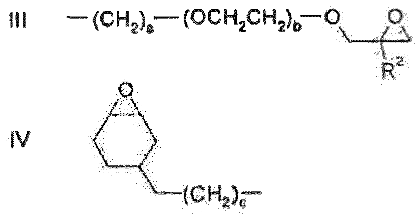 dans lesquelles R² représente un groupe alkyle, de préférence un groupe éthyle, ou un atome d'hydrogène, idéalement un atome d'hydrogène, a et c sont des nombres entiers allant de 1 à 6, et b vaut 0, 1 ou 2.

4. Composition selon la revendication 2, dans laquelle le composé de formule I est sélectionné parmi les époxytrialcoxysilanes de formule V ou VI: 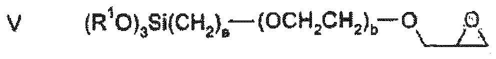 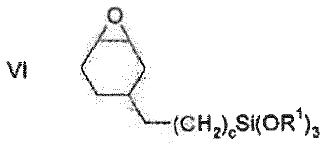 dans laquelle R¹ représente un groupe alkyle comprenant 1 à 6 atomes de carbone, a et c sont des nombres entiers allant de 1 à 6 et b vaut 0, 1 ou 2.

5. Composition selon l'une quelconque des revendications précédentes, dans laquelle ledit composé de formule (A), représente 0,5 à 20 % en poids, de préférence 0,5 à 15 % en poids, et plus préférablement encore 1 à 10 % en poids du poids total de la composition de revêtement.

6. Composition selon l'une quelconque des revendications précédentes, dans laquelle ledit composé de formule (A), présente une masse moléculaire inférieure ou égale à 10 000 g/mol, plus préférablement inférieure ou égale à 5 000 g/mol, plus préférablement encore inférieure ou égale à 2 000 g/mol et de façon préférée entre toutes inférieure ou égale à 400 g/mol.

7. composition selon l'une quelconque des revendications précédentes, dans laquelle ledit polymère conducteur, est sélectionné parmi les polyanilines, les polypyrroles, les polythiophènes, les polythiénothiophènes, les polyéthylène-imines, les polysélénophènes, les polyacétylènes, les poly(allylamines), de préférence parmi les polythiophènes, plus préférablement les polythiophènes polystyrène sulfonates.

8. Composition selon l'une quelconque des revendications précédentes, comprenant en outre des charges, de préférence des nanoparticules d'au moins un oxyde de métal ou de métalloïde.

9. Composition selon l'une quelconque des revendications précédentes, dans laquelle ledit composé de formule (A), est un diméthyléther de poly(éthylèneglycol) ou un diéthyléther de poly(éthylèneglycol), de préférence le diméthyléther du diéthylèneglycol.

10. Article d'optique comprenant un substrat, dans lequel le substrat est au moins partiellement revêtu d'un revêtement antistatique transparent obtenu par dépôt sur le substrat et durcissement d'une composition durcissable selon l'une quelconque des revendications 1 à 9.

11. Article d'optique selon la revendication 10, défini en outre en ce qu'il présente un facteur relatif de transmission lumineuse dans le spectre visible Tv supérieur à 90 %, de préférence supérieur à 91 %, plus préférablement supérieur à 92 %.

12. Article d'optique selon la revendication 10 ou 11, défini en outre en ce qu'il est une lentille, ou une ébauche de lentille, de préférence une lentille ophtalmique ou une ébauche de lentille ophtalmique.

13. Article d'optique selon l'une quelconque des revendications 10 à 12, défini en outre en ce qu'il présente un temps de décharge ≤ 500 millisecondes, de préférence ≤ 200 millisecondes et plus préférablement ≤ 100 millisecondes.

14. Article d'optique selon l'une quelconque des revendications 10 à 13, dans lequel l'épaisseur du revêtement antistatique va de 5 à 5 000 nm, plus préférablement de 5 à 3 000 nm et encore plus préférablement de 50 à 2 000 nm.

15. Procédé de préparation d'un article d'optique antistatique transparent, comprenant les étapes suivantes :
- fournir un article d'optique comprenant un substrat présentant au moins une surface principale,
- appliquer sur au moins une partie de ladite surface principale du substrat, une composition durcissable selon l'une quelconque des revendications 1 à 9, puis
- durcir ladite composition.
